Europäisches Patentamt

European Patent Office

Office européen des brevets

(19)

(11) Publication number: **0 153 804**
**B1**

# (12) EUROPEAN PATENT SPECIFICATION

(45) Date of publication of patent specification: **22.06.88**

(51) Int. Cl.⁴: **G 02 B 23/26**

(21) Application number: **85300406.7**

(22) Date of filing: **22.01.85**

(54) Devices for inspecting inner surfaces of tubular objects.

(30) Priority: **30.01.84 US 575259**

(43) Date of publication of application:
**04.09.85 Bulletin 85/36**

(45) Publication of the grant of the patent:
**22.06.88 Bulletin 88/25**

(84) Designated Contracting States:
**AT BE CH DE FR GB IT LI LU NL SE**

(56) References cited:
**DE-B-1 059 615**
**DE-B-1 117 256**
**DE-B-1 961 168**
**DE-C-1 112 653**
**FR-A-2 301 837**

(73) Proprietor: **THE BABCOCK & WILCOX COMPANY**
**1010 Common Street P.O. Box 60035**
**New Orleans Louisiana 70160 (US)**

(72) Inventor: **Fitzgerald, Charles S.**
**38 Deer Run Road**
**Brookfield Connecticut 06804 (US)**
Inventor: **Berthold, John W. III**
**1370 N. Union Avenue**
**Salem Ohio (US)**

(74) Representative: **Cotter, Ivan John et al**
**D. YOUNG & CO. 10 Staple Inn**
**London WC1V 7RD (GB)**

Courier Press, Leamington Spa, England.

EP 0 153 804 B1

## Description

This invention relates to devices for inspecting the inner surfaces of tubular objects.

The inner surfaces of tubes, such as steam generator tubes, are usually inspected by means of a mechanical probe having a plurality of spring loaded feelers attached thereto. By monitoring the deflections of the springs through the use of strain gauges mounted on the feelers, deposits and/or obstructions within the tube can be determined. However, inasmuch as only a relatively small number of feelers can be utilised due to space limitations, and these feelers are in a spaced apart relationship, inspection of the entire inner periphery of the tube cannot be accomplished. In addition, since the feelers contact the inner surface of the tube and are spring loaded, there is always the risk of damaging extremely fragile tubes during such inspection. And, lastly, the use of such a mechanical type probe does not permit the user to actually view the deposits and/ or obstructions within the tube being inspected.

Because of the foreoing, it has become desirable to develop a non-contact inspection device or probe which allows the user visually to inspect the entire inner periphery of a tubular object.

German (Federal Republic) Patent Specification DE—C—1 112 653 disclosed two embodiments of a device for detecting defective locations on the inner surface of a tubular object in which a circumferential band of illumination is produced on the inner surface of the object. In a first embodiment, the band of illumination is produced by reflecting a beam of light (location of source not specified) from a screen member. In a second embodiment, the band is produced by a pair of screen members mounted in close proximity to one another adjacent an electric lamp disposed in the tubular object. The band of illumination is produced such that a light/shadow boundary is sharply delimited by a screen member, on the one hand, and by defects on the inner wall, on the other hand. In the first embodiment, an optical image of the boundary is transmitted, via an optical system, directly to the outside of the tubular object. In the second embodiment, an electrical means (television camera tube) is arranged to intercept the optical image from the optical system, thereby indirectly to transmit the image to the outside of the tubular object.

An object of the present invention is to provide an improved device for inspecting the surface of a tubular object by means of illuminating the interior by way of a light beam.

According to the invention there is provided a device for inspecting the inner surface of a tubular object, the device comprising means for transmitting a beam of light into the tubular object, a target to reflect the light beam onto the inner surface of the tubular object to produce a circumferential band of illumination on the inner surface of the tubular object, and means for intercepting light emanating from the circumferential illumination band, the intercepting means comprising a group of optical fibres positioned in an annular arrangement.

The use of a group of optical fibres positioned in an annular ring arrangement enables interception of light emanating from the circumferential illumination band in a simple and effective manner.

A preferred form of device (also referred to hereinafter as a "non-contact probe assembly") embodying the present invention and described hereinbelow includes an inner core of optical fibres which act as the means for transmitting the beam of light into the tubular object, that is as a light source, the annular arrangement of optical fibres for intercepting light, which arrangement surrounds the inner core of optical fibres, a pair of plano-convex lenses which focuses both a light beam emanating from the inner core of optical fibres and the reflected light beam so that it can be intercepted by the annular arrangement of optical fibres, and a target in the form of a reflective ball bearing or a concave cone. The light reflected by the reflective ball bearing or the concave cone causes the illumination of a circumferential band on the inner surface of the tube. The light from this band is transmitted to the annular arrangement of optical fibres so that a visual inspection of the inner surface of the tube can be made. The ends of the optical fibres comprising the annular arrangement are bevelled at a predetermined angle to optimise the transfer of light from the circumferential band to the optical fibres within the annular arrangement.

The invention will now be further described, by way of illustrative and non-limiting example, with reference to the accompanying drawings, in which:

Figure 1 is a front plan view, partially broken away in cross-section, illustrating a probe assembly embodying the present invention;

Figure 2 is a view, similar to Figure 1, of an alternative embodiment of the invention which is a modification of the embodiment illustrated in Figure 1;

Figure 3 is a front plan view of the probe assembly when inserted into a tube to be inspected;

Figure 4 is an enlarged front plan view illustrating bevelling of ends of an annular ring of optical fibres which intercepts reflected light; and

Figure 5 is an enlarged front plan view illustrating the bevelling of the ends of the optical fibres comprising the annular arrangement by grinding a convex surface on the end of the annular ring.

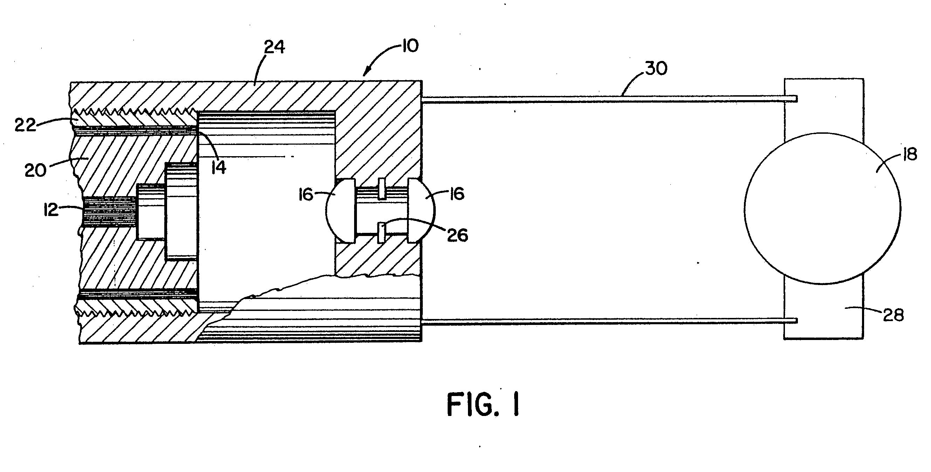

Figure 1 is a cross-sectional view of a first embodiment of the invention and illustrates a probe assembly 10. This assembly 10 primarily comprises a group of large diameter optical fibres 12 which form a central portion of the assembly, an annular arrangement 14 of smaller diameter optical fibres which is concentric (coaxial) with the large diameter optical fibre group 12, a pair of plano-convex lenses 16, and a reflective ball bearing 18 held in a spaced apart relationship from the pair of lenses 16 and the optical fibres 12 and 14.

The group of large diameter optical fibres 12 acts as a light source and comprises approximately 37 fibres each having a clad diameter of approximately 0.203 mm (0.008 in). A coaxial spacer 20 surrounds the large diameter optical fibre group 12 and is interposed between the optical fibre group 12 and the annular arrangement 14 of smaller diameter optical fibres. In this manner, the annular arrangement 14 of the smaller optical fibres and the large diameter optical fibre group 12 are held in a concentric relationship. The annular arrangement 14 of smaller diameter optical fibres acts as an interceptor of light reflected by the ball bearing 18 and comprises approximately 1500 fibres each having a clad diameter of approximately 0.038 mm (0.0015 in) and a core diameter of approximately 0.019 mm (0.00075 in). Both the large diameter optical fibre group 12 and the annular arrangement 14 of smaller diameter optical fibres are bifurcated to facilitate the introduction of light at an input end of the large diameter optical fibre group 12 and the collection of light at an output end of the annular 14 of smaller diameter optical fibres. In addition, the end of the large diameter fibre group 12 is recessed in the coaxial spacer 20 so as to separate the light transmitted by the large diameter fibre group 12 from that reflected to and collected by the annular arrangement 14 of smaller diameter optical fibres.

A tubular sleeve 22 is received over the assembly of the large diameter optical fibre group 12, the coaxial spacer 20, and the annular 14 of the smaller diameter optical fibres. The tubular sleeve 22 is, in turn, threadably received in a collar nut 24 which retains the pair of plano-convex lenses 16 in a spaced apart relationship with respect to each other and with respect to the end of the large diameter optical fibre group 12 and the annular arrangement 14 of smaller diameter optical fibres.

The arrangement of the pair of plano-convex lenes 16 is a variation of the classic wide-angle configuration. Each plano-convex lens has a focal length of approximately 6 mm giving an effective focal length of approximately 4.2 mm for the combination of lenses. An aperture 26 having a diameter of approximately 2 mm is interposed between the lenses giving an f-stop of approximately 2 for the overall lens arrangement.

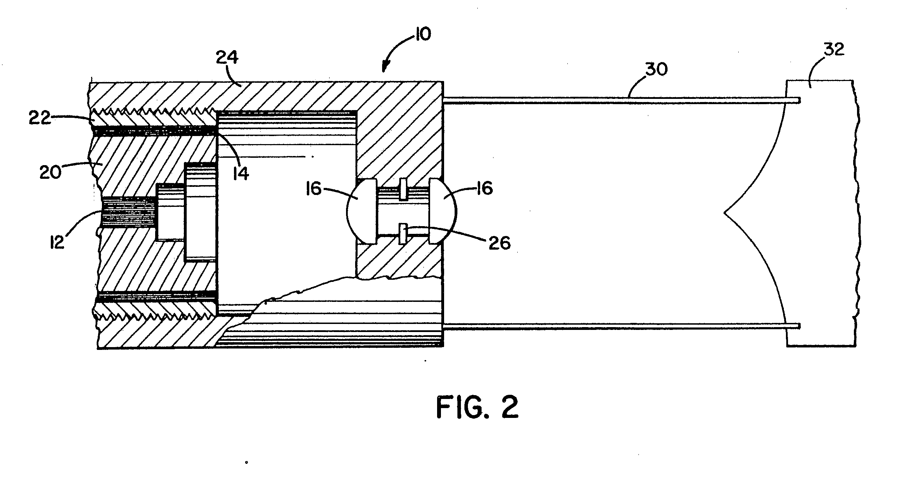

The reflective ball bearing 18 is retained within a mounting block 28 which is held in a spaced apart relationship with the pair of plano-convex lenses 16 by means of a plurality of thin wires 30 which minimise the blockage of light and maximise the passage of light therebetween. In this manner, the pair of plano-convex lenses 16 is interposed between the reflective ball bearing 18 and the assembly comprising the large diameter optical fibre group 12 and the annular arrangement 14 of smaller diameter optical fibres. In an alternative embodiment, as shown in Figure 2, the reflective ball bearing 18 and its associated mounting block 26 are replaced by a concave cone 32 having a configuration as indicated.

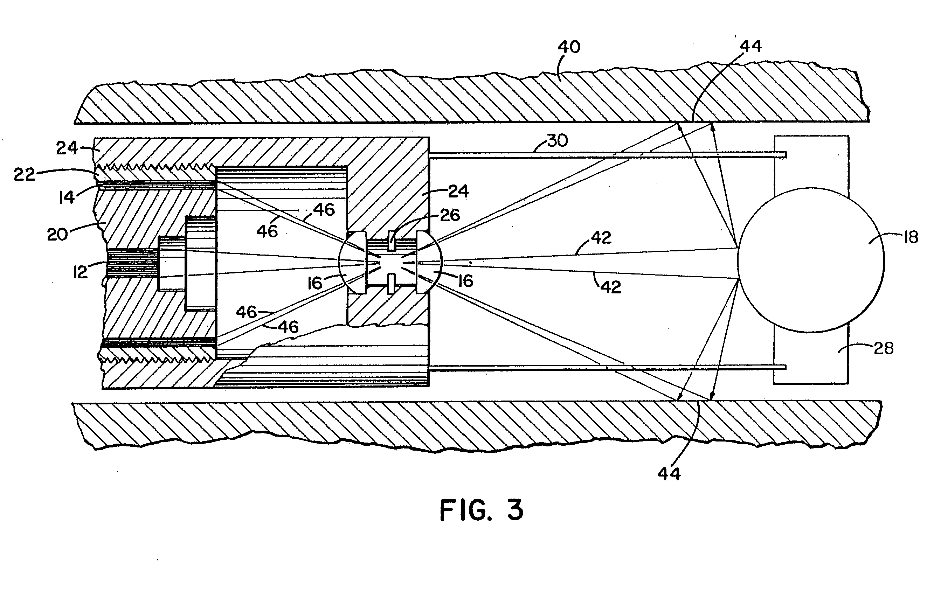

Either of the aforementioned embodiments can be used to illuminate the interior of a tube, such as a steam generator tube. To accomplish such illumination, the probe assembly 10 is inserted into the tube 40 to be illuminated, as illustrated in Figure 3. A light source (not shown) is then directed towards the end of the large diameter optical fibre group 12, causing a beam of light to be transmitted therethrough and to emanate therefrom. The resulting diverging light beam, shown generally by the numeral 42, is focused by the pair of plano-convex lenses 16 and the aperture 26 to an image plane in front of the reflective ball bearing 18 or the concave cone 32. The light striking the ball bearing 18 or the concave cone 32 is then reflected so as to illuminate a circumferential band, shown generally by the numeral 44, on the interior surface of the tube 40. The width of the circumferential band 44 is dependent upon the relative dimensions between the components within the probe assembly 10. However, peak illumination intensity within the circumferential band 44 occurs approximately at the location of the object plane of the pair of plano-convex lenses 16.

The light emanating from the circumferential band 44 is then focused by the pair of plano-convex lenses 16 and the aperture 26 located therebetween into a reflected light beam, shown generally by the numeral 46, which is intercepted by the end of the annular arrangement 14 of smaller diameter optical fibres. These smaller diameter optical fibres then transmit this light from the circumferential band to detectors or viewing devices (not shown) so that the condition of the interior surface of the tube can be determined.

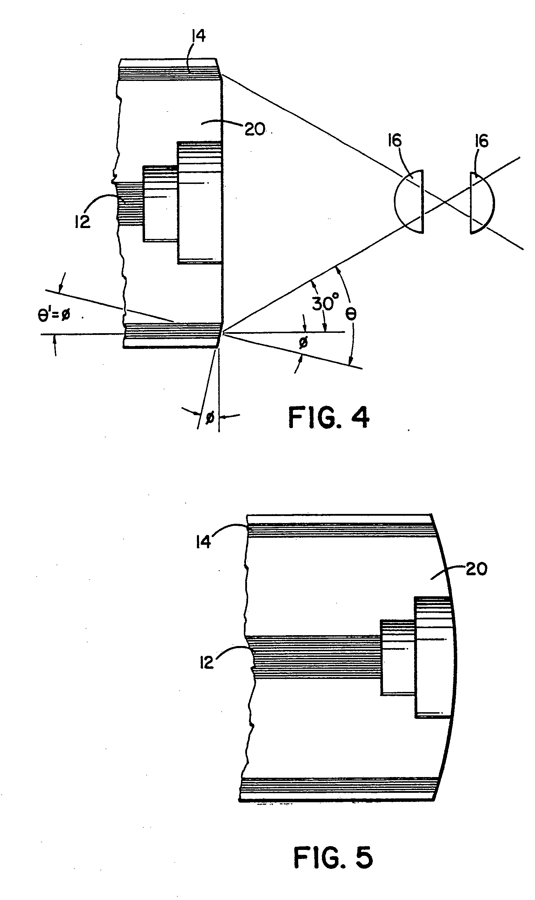

By experimentation, it has been determined that the median image field angle, i.e. the angle of the reflected light beam 46 with respect to the horizontal, is approximately 30°, as illustrated in Figure 4. At this angle, only 0.4% of the light which passes through the aperture 26 enters the smaller diameter optical fibres in the annular arrangement 14. Thus, the coupling of light from the tube wall into the fibres in the annular arrangement 14 is very inefficient. It has been found that this coupling efficiency can be increased by bevelling the ends of the fibres in the annular arrangement 14, as shown in Figure 4. Such bevelling allows the reflected light beam from the tube wall to be transmitted through the fibres comprising the annular arrangement 14 in the direction parallel to their respective axes. In this manner, optimum coupling efficiency is achieved.

Referring now to Figure 5, an enlarged view of the fibre end of the probe assembly 10 is illustrated. From Snell's law, it can be determined that

$$\sin (30° + \phi) = n \sin \theta' = n \sin \phi$$

where n is the index of refraction of the glass constituting the small diameter optical fibres in the annular arrangement 14 and is equal to 1.5. Solving the foregoing equation for φ, the bevel angle, results in

$$\phi \approx 38°.$$

Thus, optimum coupling efficiency occurs where the angle of the bevel applied to the ends of the smaller diameter fibres comprising the annular arrangement 14 is approximately 38°. It has been determined experimentally that the coupling efficiency from image to fibre is increased by greater than 100 times by the application of the foregoing bevel to the end of the annular arrangement 14. In addition, it has been found that one approach for obtaining a circularly symmetrical bevel is to grind a convex surface of a predetermined radius on the end of the annular arrangement 14, as shown in Figure 5. The radius of the foregoing convex surface is dependent upon the overall width of the probe assembly 10. It should be noted that other approaches can be utilised for applying a symmetrical bevel onto the end of the annular arrangement 14. However, it has been determined that grinding a convex surface of a predetermined radius yields excellent results in an expeditious manner.

## Claims

1. A device for inspecting the inner surfce of a tubular object, the device comprising means for transmitting a beam of light (42) into the tubular object (40), a target (18; 32) to reflect the light beam onto the inner surface of the tubular object (40) to produce a circumferential band (44) of illumination on the inner surface of the tubular object (40), and means for intercepting light emanating from the circumferential illumination band (44), the intercepting means comprising a group (hereinafter referred to as "the interception group") of optical fibres positioned in an annular arrangement (14).

2. A device according to claim 1, wherein the means for transmitting a beam of light (42) into the tubular object (40) comprises a group (hereinafter referred to as "the transmission group") of optical fibres (12).

3. A device according to claim 2, wherein the transmission group of optical fibres (12) is received within the annular arrangement (14) of the interception group of optical fibres.

4. A device according to claim 3, including spacer means (20) interposed between the transmission group of optical fibres (12) and the annular ring arrangement (14) of the interception group of optical fibres, the spacer means (20) causing the annular arrangement (14) of the interception group of optical fibres to be in a concentric relationship with the transmission group of optical fibres (12).

5. A device according to claim 2, claim 3 or claim 4, wherein the light beam transmitting end of the transmission group of optical fibres (12) is recessed relative to the light beam intercepting end of the annular arrangement (14) of the interception group of optical fibres.

6. A device according to any one of claims 2 to 5, wherein the number of optical fibres forming the interception group of optical fibres is greater than the number of optical fibres forming the transmission group of optical fibres (12).

7. A device according to any one of claims 2 to 6, wherein the diameter of the optical fibres forming the transmission group of optical fibres (12) is greater than the diameter of the optical fibres forming the interception group of optical fibres.

8. A device according to any one of the preceding claims, wherein the light beam intercepting end of the annular arrangement (14) of the interception group of optical fibres is bevelled at a predetermined angle to optimise the transfer of light from the circumferential illumination band (44) to the interception group of optical fibres positioned in the annular arrangement (14).

9. A device according to claim 8, wherein the bevelling of the light beam intercepting end of the annular ring arrangement (14) is approximated by forming a convex surface of a predetermined radius on the light beam intercepting end of the annular arrangement.

10. A device according to any one of the preceding claims, including means for focusing the light beam (42) emanating from the transmitting means onto the target (18; 32) and for focusing the light emanating from the circumferential illumination band (44) towards the intercepting means.

11. A device according to claim 10, wherein the focusing means is interposed between the transmitting means and the target (18; 32).

12. A device according to claim 10, wherein the focusing means is interposed between the target (18; 32) and the intercepting means.

13. A device according to claim 10, claim 11 or claim 12, wherein the focusing means comprises a pair of plano-convex lenses (16).

14. A device according to claim 13, including an aperture arrangement (26) positioned between the pair of plano-convex lenses (16).

15. A device according to any one of claims 1 to 14, wherein the target is a reflective ball bearing member (18).

16. A device according to any one of claims 1 to 14, wherein the target is a cone (32) having a concave configuration.

## Patentansprüche

1. Vorrichtung zum Untersuchen der Innenfläche von rohrförmigen Objekten, wobei die Vorrichtung Mittel aufweist zum Leiten eines Lichtstrahles (42) in das rohrförmige Objekt (40), ein Ziel (18; 32) zum Reflektieren des Lichtstrahles auf die Innenoberfläche des rohrförmigen Objektes (40) zur Erzeugung eines Beleuchtungsumfangsbandes (44) auf der Innenoberfläche des rohrförmigen Objektes (40) und Mittel zum Auffangen des von dem Beleuchtungsumfangsband (44) ausgestrahlten Lichtes, wobei das Auffangmittel eine Gruppe (nachfolgend die "Auffanggruppe" bezeichnet) von optischen Fasern aufweist, die in einer Ringanordnung (14) angeordnet sind.

2. Vorrichtung nach Anspruch 1, wobei das Mittel zum Leiten eines Lichtstrahles (42) in das rohrförmige Objekt (40) hinein eine Gruppe (nachfolgend als "die Leitungsgruppe" bezeichnet) von optischen Fasern (12) aufweist.

3. Vorrichtung nach Anspruch 2, wobei die Leitungsgruppe von optischen Fasern (12) in der Ringanordnung (14) der Auffanggruppe der optischen Fasern aufgenommen ist.

4. Vorrichtung nach Anspruch 3 mit Abstandmitteln (20), die zwischen der Leitungsgruppe von optischen Fasern (12) und der ringförmigen Anordnung (14) der Auffanggruppe von optischen Fasern angeordnet ist, wobei die Abstandsmittel (20) verursachen, daß die Ringanordnung (14) der Auffanggruppe der optischen Fasern sich in konzentrischer Lage zur Leitungsgruppe der optischen Fasern (12) befindet.

5. Vorrichtung nach Anspruch 2, Anspruch 3 oder Anspruch 4, wobei das den Lichtstrahl leitende Ende der Leitungsgruppe der optischen Fasern (12) relativ zu dem den Lichstrahl auffangenden Ende der ringförmigen Anordnung (14) der Auffanggruppe der optischen Fasern mit mindestens einer Ausnehmung versehen ist.

6. Vorrichtung nach einem der Ansprüche 2 bis 5, wobei die Anzahl der optischen Fasern, welche die Auffanggruppe der optischen Fasern bilden, größer als die Anzahl der optischen Fasern ist, welche die Leitungsgruppe der optischen Fasern (12) bilden.

7. Vorrichtung nach einem der Ansprüche 2 bis 6, wobei der Durchmesser der optischen Fasern, welche die Leitungsgruppe von optischen Fasern (12) bilden, größer ist als der Durchmesser der optischen Fasern, welche die Auffanggruppe der optischen Fasern bilden.

8. Vorrichtung nach einem der vorhergehenden Ansprüche, wobei das Lichtstrahlauffangende der ringförmigen Anordnung (14) der Auffanggruppe von optischen Fasern unter einem bestimmten Winkel abgeschrägt ist zur Optimierung der Lichtleitung aus dem Beleuchtungsumfangsband (44) zur Auffanggruppe der optischen Fasern, die in der Ringanordnung (14) angeordnet sind.

9. Vorrichtung nach Anspruch 8, wobei das Abschrägen des Lichtstrahlauffangendes der ringförmigen Anordnung (14) durch Bildung einer konvexen Oberfläche eines vorbestimmten Radius auf dem Lichtstrahlauffangende der Ringanordnung angenähert wird.

10. Vorrichtung nach einem der vorhergehenden Ansprüche, mit Mitteln zum Fokussieren des Lichtstrahls (42), der von dem Leitungsmittel auf das Ziel (18; 32) ausgestrahlt wird, un zum Fokussieren des Lichtes, welches von dem Beleuchtungsumfangsband (44) zu dem Auffangmittel ausgestrahlt wird.

11. Vorrichtung nach Anspruch 10, wobei das Fokussiermittel zwischen dem Leitungsmittel und dem Ziel (18; 32) angeordnet ist.

12. Vorrichtung nach Anspruch 10, wobei das Fokussiermittel zwischen dem Ziel (18; 32) und dem Auffangmittel angeordnet ist.

13. Vorrichtung nach Anspruch 10, Anspruch 11 oder Anspruch 12, wobei das Fokussiermittel ein Paar von plankonvexen Linsen (16) aufweist.

14. Vorrichtung nach Anspruch 13, mit einer Öffnungsanordnung (26), die zwischen dem Paar von plankonvexen Linsen (16) angeordnet ist.

15. Vorrichtung nach einem der Ansprüche 1 bis 14, wobei das Ziel ein reflektierendes Kugellagertiel (18) ist.

16. Vorrichtung nach einem der Ansprüche 1 bis 14, wobei das Ziel ein Konus (32) mit einer konkaven Gestaltung ist.

## Revendications

1. Dispositif pour l'examen de la surface intérieure d'un objet tubulaire, le dispositif comprenant un moyen pour la transmission d'un faisceau lumineux (42) à l'intérieur de l'objet tubulaire (40), une cible (18, 32) pour réfléchir le faisceau lumineux sur la surface intérieure de l'objet tubulaire (40) pour établir une bande circonférentielle (44) d'éclairage sur la surface intérieure de l'objet tubulaire (40), et un moyen pour l'interception de la lumière émanant de la bande d'éclairage circonférentielle (44), le moyen d'interception comportant un groupe (dit ci-après "le groupe d'interception") de fibres optiques disposées en formation annulaire (14).

2. Dispositif selon la revendication 1, dans lequel le moyen de transmission d'un faisceau lumineux (42) à l'intérieur de l'objet tubulaire (40) comporte un groupe (dit ci-après "le groupe de transmission") de fibres optiques (12).

3. Dispositif selon la revendication 2, dans lequel le groupe de fibres optiques de transmission (12) est reçu à l'intérieur de la formation annulaire (14) du groupe de fibres optiques d'interception.

4. Dispositif selon la revendication 3, comportant un moyen d'entretoise (20) interposé entre le groupe de fibres optiques de transmission (12) et la formation annulaire (14) du groupe de fibres optiques d'interception, le moyen d'entretoise obligeant la formation annulaire (14) du groupe de fibres optiques d'interception à être concentrique par rapport au groupe de fibres optiques de transmission (12).

5. Dispositif selon la revendication 2, la revendication 3 ou la revendication 4, dans lequel l'extrémité de transmission de faisceau lumineux du groupe de fibres optiques de transmission (12) est en retrait par rapport à l'extrémité d'interception de faisceau lumineux de la formation annulaire (14) du groupe de fibres optiques d'interception.

6. Dispositif selon l'une quelconque des revendications 2 à 5, dans lequel le nombre de fibres optiques constituant le groupe de fibres optiques d'interception est plus grand que le nombre de fibres optiques constituant le groupe de fibres optiques de transmission (12).

7. Dispositif selon l'une quelconque des revendications 2 à 6, dans lequel le diamètre des fibres optiques constituant le groupe de fibres optiques de transmission (12) est plus grand que le diamètre des fibres optiques constituant le groupe de fibres optiques d'interception.

8. Dispositif selon l'une quelconque des revendications précédentes, dans lequel l'extrémité d'interception de faisceau lumineux de la formation annulaire (14) du groupe de fibres optiques d'interception est biseauté à un angle déterminé pour optimiser la transmission de lumière depuis la bande d'éclairage circonférentielle (44) jusqu'au groupe de fibres optiques d'interception placé dans la formation annulaire (14).

9. Dispositif selon la revendication 8, dans lequel le biseautage de l'extrémité d'interception de faisceau lumineux de la formation annulaire (14) est approché en façonnant une surface convexe de rayon prédéterminé sur l'extrémité d'interception de faisceau lumineux de la formation annulaire.

10. Dispositif selon l'une quelconque des revendications précédentes, comportant un moyen pour focaliser le faisceau lumineux (42) émanant du moyen de transmission sur la cible (18; 32) et pour focaliser la lumière émanant de la bande d'éclairage circonférentielle (44) vers le moyen d'interception.

11. Dispositif selon la revendication 10, dans lequel le moyen de focalisation est interposé entre le moyen de transmission et la cible (18; 32).

12. Dispositif selon la revendication 10, dans lequel le moyen de focalisation est interposé entre la cible (18; 32) et le moyen d'interception.

13. Dispositif selon la revendication 10, la revendication 11 ou la revendication 12, dans lequel le moyen de focalisation comprend une paire de lentilles plan-convexes (16).

14. Dispositif selon la revendication 13, comportant un agencement d'ouverture (26) placé entre les deux lentilles plan-convexes (16).

15. Dispositif selon l'une quelconque des revendications 1 à 14, dans lequel la cible est un élément de roulement à billes réfléchissant (18).

16. Dispositif selon l'une quelconque des revendications 1 à 14, dans lequel la cible est un cône (32) ayant une configuration concave.

FIG. 1

FIG. 2

0 153 804

FIG. 3

FIG. 4

FIG. 5

4